# EUROPÄISCHE PATENTANMELDUNG

(11) **EP 4 528 410 A1**
(43) Veröffentlichungstag der Anmeldung: **26.03.2025**
(21) Anmeldenummer: 24199411.0
(22) Anmeldetag: 10.09.2024
(51) Int. Cl.: G05B 19/408, G05B 19/4097, G05B 19/418

(54) **DATENSYSTEM, DATENSCHNITTSTELLENVORRICHTUNG, FERTIGUNGSSYSTEM UND VERFAHREN ZUM STEUERN EINER WERKZEUGMASCHINE**

(30) Priorität: 15.09.2023 DE 102023125008
(71) Anmelder: DMG MORI Digital GmbH, 33689 Bielefeld (DE)
(72) Erfinder: KARNATH, Juliane, 33803 Steinhagen (DE)
(74) Vertreter: MERH-IP Matias Erny Reichl Hoffmann Patentanwälte PartG mbB

(57) **Zusammenfassung**

Die Erfindung stellt ein Datensystem 100 zum Generieren und Übertragen von Auftragsdaten an zumindest eine numerisch gesteuerte Werkzeugmaschine 200a, 200b, bereit, umfassend eine Datenschnittstellenvorrichtung 10, die wiederum ein Schnittstellenmodul 11 zur Datenübertragung und ein Datenverarbeitungsmodul 12 zur Datenverarbeitung und Datengenerierung umfasst, ein CAM-System 20, das zum Generieren und Bereitstellen von NC-Programmen für eine Werkstückbearbeitung an einer numerisch gesteuerten Werkzeugmaschine 200a, 200b eingerichtet ist und zur Datenübertragung mit der Datenschnittstellenvorrichtung 10 mit deren Schnittstellenmodul 11 gekoppelt ist, und ein Produktionsleitsystem 30, das zum Generieren und Bereitstellen von Fertigungsdaten für ein zu fertigendes Produkt und/oder für zu fertigenden Produkte eingerichtet ist und zur Datenübertragung mit der Datenschnittstellenvorrichtung 10 mit deren Schnittstellenmodul 11 gekoppelt ist. Die Datenschnittstellenvorrichtung ist eingerichtet, auf Basis eines vom CAM-System 20 empfangenen NC-Programmdatensatzes und eines vom Produktionsleitsystem 30 empfangenen Fertigungsdatensatzes mittels des Datenverarbeitungsmoduls 12 einen Auftragsdatensatz zu generieren, der durch eine numerisch gesteuerte Werkzeugmaschine 200a, 200b auslesbar ist, und diesen mittels des Schnittstellenmoduls 11 an eine mit diesem gekoppelte numerisch gesteuerte Werkzeugmaschine 200a, 200b zu übertragen, insbesondere an eine Steuervorrichtung 210a, 210b der Werkzeugmaschine 200a, 200b.

## Beschreibung

### Technisches Gebiet

Die vorliegende Erfindung betrifft ein Datensystem zum Generieren und Übertragen von Auftragsdaten an eine numerisch gesteuerte Werkzeugmaschine, ein Datenschnittstellenvorrichtung zum Einsatz in einem Datensystem zur zum Generieren und Übertragen von Auftragsdaten an eine numerisch gesteuerte Werkzeugmaschine, ein Fertigungssystem und ein Verfahren zum Steuern einer numerisch gesteuerten Werkzeugmaschine.

### Hintergrund der Erfindung

Im Bereich der automatisierten Fertigung von Produkten kommen üblicherweise numerisch gesteuerte Werkzeugmaschinen (NC- oder CNC-Werkzeugmaschinen) zum Einsatz, die in einem Maschinenpark angeordnet sind, um die zur Herstellung der Produkte notwendigen Bearbeitungen an den diesen zugrundeliegenden Werkstücken vorzunehmen.

Die Werkzeugmaschinen bzw. deren Steuervorrichtung wird dabei aus unterschiedlichen Quellen mit Daten für einen durch die Werkzeugmaschine durchzuführenden Bearbeitungsauftrag versorgt. Im Zuge dessen werden der Werkzeugmaschine in der Regel detaillierte Informationen über einen Bearbeitungsablauf, also über die Abfolge einzelner Bearbeitungsschritte, sowie die für diese benötigten NC-Programme bereitgestellt.

Die Informationen zum Bearbeitungsverlauf werden dabei üblicherweise von einem Produktionsleitsystem (engl.: MES-System für Manufacturing Execution System) bereitgestellt, wohingegen die NC-Programme durch ein CAM-System (Computer-Aided-Manufacturing System) bereitgestellt werden.

Die Bereitstellung zur Durchführung eines Bearbeitungsauftrags nötigen Informationen bzw. Daten gestaltet sich insbesondere beim Einsatz einer Vielzahl unterschiedlicher Werkzeugmaschinen (was in einem Maschinenpark durchaus der Fall ist) sowie unterschiedlicher CAM- oder Produktionsleitsysteme schwierig, da diese in der Regel jeweils unterschiedliche Übertragungsprotokolle für die Datenübertragung oder sogar unterschiedliche Datei- und/oder Datenformate der zu übertragenen Daten erfordern.

Dadurch wird insbesondere die Integration neuer Werkzeugmaschinen oder alternativer CAM- und/oder Produktionsleitsysteme erschwert, da diese eine vorherige manuelle Anpassung aufeinander bedürfen, was sowohl zeit- als auch kostenintensiv ausfallen kann und auch die Flexibilität der Fertigung im Maschinenpark negativ beeinträchtigt. Erschwert wird dies insbesondere im Falle eines heterogenen Maschinenparks aus Alt-, Fremd- und Neumaschinen.

### Zusammenfassung

Eine Aufgabe der vorliegenden Erfindung ist es daher, eine effizientere Möglichkeit zur Auftragsbereitstellung an numerisch gesteuerten Werkzeugmaschinen in einem Maschinenpark bereitzustellen.

Zur Lösung dieser Aufgabe wird ein Datensystem nach Anspruch 1, eine Datenschnittstellenvorrichtung nach Anspruch 13, ein Fertigungssystem nach Anspruch 14 und ein Verfahren zum Steuern einer numerisch gesteuerten Werkzeugmaschine nach Anspruch 15 ausgeführt.

Die übrigen abhängigen Ansprüche beziehen sich dabei auf bevorzugte Ausführungsformen der Verfahren oder der Werkzeugmaschine, die jeweils für sich genommen oder in Kombination ausgeführt werden können.

Gemäß eines ersten Aspekts der Erfindung wird Datensystem zum Generieren und Übertragen von Auftragsdaten an zumindest eine numerisch gesteuerte Werkzeugmaschine ausgeführt, umfassend eine Datenschnittstellenvorrichtung, die wiederum ein Schnittstellenmodul zur Datenübertragung und ein Datenverarbeitungsmodul zur Datenverarbeitung und Datengenerierung umfasst, ein CAM-System, das zum Generieren und Bereitstellen von NC-Programmen für eine Werkstückbearbeitung an einer numerisch gesteuerten Werkzeugmaschine eingerichtet ist und zur Datenübertragung mit der Datenschnittstellenvorrichtung mit deren Schnittstellenmodul gekoppelt ist, und ein Produktionsleitsystem, das zum Generieren und Bereitstellen von Fertigungsdaten für ein zu fertigendes Produkt und/oder für zu fertigenden Produkte eingerichtet ist und zur Datenübertragung mit der Datenschnittstellenvorrichtung mit deren Schnittstellenmodul gekoppelt ist. Die Datenschnittstellenvorrichtung ist eingerichtet, auf Basis eines vom CAM-System empfangenen NC-Programmdatensatzes und eines vom Produktionsleitsystem empfangenen Fertigungsdatensatzes mittels des Datenverarbeitungsmoduls einen Auftragsdatensatz zu generieren, der durch eine numerisch gesteuerte Werkzeugmaschine auslesbar ist, und diesen mittels des Schnittstellenmoduls an eine mit diesem gekoppelte numerisch gesteuerte Werkzeugmaschine zu übertragen, insbesondere an eine Steuervorrichtung der Werkzeugmaschine.

Das Datensystem verfügt damit mit der Datenschnittstellenvorrichtung über eine universelle Schnittstelle, die die vorher weitestgehend manuell (über USB-Stick etc.) an die Werkzeugmaschine zu übertragenden Daten bündelt und gesammelt als Auftragsdatensatz an diese überträgt.

Auf diese Weise werden Arbeitsläufe im Bereich der Massenfertigung zunehmend automatisiert, was Zeit und Kosten einspart. Ferner können so auch Fehler oder Datenverluste bei der Datenweitergabe an die Werkzeugmaschinen reduziert werden.

Als weiterer Vorteil kann dadurch auch die Flexibilität im Maschinepark erhöht werden. So können beispielsweise neue Werkzeugmaschinen ohne größeren Aufwand integriert werden und direkt mit Daten vom CAM- und Produktionsleitsystem über die Datenschnittstellenvorrichtung versorgt werden.

Ein Auftragsdatensatz ist ein spezifischer Satz an Auftragsdaten, ein Fertigungsdatensatz ein spezifischer Satz an Fertigungsdaten und ein NC-Programmdatensatz ein spezifisches NC-Programm oder eine Ansammlung mehrerer spezifischer NC-Teilprogramme.

NC-Programme sind Programme, die durch eine Steuerung einer numerisch gesteuerten Werkzeugmaschine ausgeführt werden können, um so Aktoren der Werkzeugmaschine in der im NC-Programm angegeben Weise anzusteuern.

NC-Programme können sich je nach Werkzeugmaschine in ihrem Daten- oder Dateiformat sowie in ihrer Programmiersprache unterscheiden.

Fertigungsdaten betreffen den Fertigungsablauf des zu fertigenden Produkts und können einen Ablauf der zu durchlaufenden Werkzeugmaschinen, z. B. zuerst zerspanende Bearbeitung auf Werkzeugmaschine 1 und dann additive Bearbeitung auf Werkzeugmaschine 2 usw., enthalten. Ebenso können die Fertigungsdaten auch eine zeitliche Abfolge von Bearbeitungsschritten an einer einzelnen Werkzeugmaschine, z. B. erst Fräsen, dann Bohren dann Schleife usw., enthalten.

Zusätzlich können die Fertigungsdaten noch weitere Daten enthalten. Nicht beschränken seien hierzu genannt: Produktbenennung oder -titel, Kundeninformationen des Produktempfängers, Prioritätslevel, technische Zeichnungen, Lasten- und Pflichtenhefte, usw. Aller in den Fertigungsdaten enthaltenen Informationen können dabei auch in die Auftragsdaten übertragen werden. Vorzugsweise wird vorbestimmt, welche Teile der Fertigungsdaten zur Generierung der Auftragsdaten genutzt werden sollen.

Auftragsdaten sind dabei als durch die empfangende Werkzeugmaschine verwertbare Daten zu verstehen, die eine Kombination aus einem oder mehreren durch die Werkzeugmaschine ausführbaren NC-Programmen oder NC-Teilprogrammen mit den Fertigungsablauf des zu fertigenden Produkts betreffenden Daten enthält.

So kann der Auftragsdatensatz Informationen zu einer zeitlichen Abfolge von Bearbeitungsschritte enthalten, wobei im Auftragsdatensatz zu jedem Bearbeitungsschritt ein durch die Werkzeugmaschine verwertbares NC-Programm oder mehrere NC-Teilprogramme hinterlegt sind, die entsprechend der zeitlichen Abfolge der Bearbeitungsschritte durchgeführt werden.

Insbesondere liegen die in den Auftragsdaten hinterlegten NC-(Teil)programme in einem durch die Werkzeugmaschine auslesbaren bzw. verwertbaren Datei- und Datenformat bzw. in einer ausführbaren Programmiersprache vor. Das in den Auftragsdaten hinterlegte NC-Programm kann sich dabei von dem durch das CAM-System bereitgestellten NC-Programm unterscheiden.

Das CAM-System ist hierbei als Überbegriff für ein reines CAM-System, ein CAM/CAD-System oder ein reines CAD-System (CAD: Computer-Aided-Design) zu verstehen.

Die Datenschnittstellenvorrichtung ist dabei vorzugsweise eingerichtet, den zu übertragenden Auftragsdatensatz in einem für die zu empfangende Werkzeugmaschine bzw. für deren Steuervorrichtung passenden Dateiformat und/oder passendes Datenformat und/oder der passenden Programmiersprache bereitzustellen.

Hierzu kann das Datenverarbeitungsmodul eingerichtet sein, den Auftragsdatensatz ausgehend vom Fertigungsdatensatz und vom NC-Programmdatensatz direkt im passenden Dateiformat und/oder im passendes Datenformat und/oder in der passenden Programmiersprache zu generieren, derart, dass der Auftragsdatensatz durch die Werkzeugmaschine bzw. durch deren Steuervorrichtung auslesbar ist.

Alternativ kann das Datensystem ein Übersetzungsmodul umfassen, das eingerichtet ist, einen bereits vom Datenverarbeitungsmodul generierten Auftragsdatensatz in ein für die zu empfangende Werkzeugmaschine auslesbaren Auftragsdatensatz zu übersetzen und dabei ein Dateiformat des generierten Auftragsdatensatzes in ein passendes Dateiformat und/oder ein Datenformat des generierten Auftragsdatensatzes in ein passendes Datenformat und/oder eine Programmiersprache des Auftragsdatensatzes in eine passende Programmiersprache abzuändern, bevor der übersetze Auftragsdatensatz über das Schnittstellenmodul übertragen wird.

Die Datenschnittstellenvorrichtung ist beim Generieren und/oder Übersetzen vorzugsweise nicht auf ein Dateiformat, Datenformat oder eine Programmiersprache für den Auftragsdatensatz beschränkt, sondern kann diese jeweils passend aus einer Vielzahl von vordefinierten Dateiformaten und/oder einer Vielzahl von vordefinierten Datenformaten und/oder einer Vielzahl von vordefinierten Programmiersprachen auswählen.

So ist die Datenschnittstellenvorrichtung vorzugsweise dazu eingerichtet, über das Schnittstellenmodul mit einer Vielzahl von Werkzeugmaschinen zu kommunizieren, insbesondere mit unterschiedlichen Werkzeugmaschinen, und dabei die Auftragsdaten entsprechend eines durch die jeweilige Werkzeugmaschine (bzw. deren Steuervorrichtung) auslesbaren Dateiformats, Datenformats oder nutzbarer Programmiersprache zu generieren und/oder ein Datei-, Datenformat oder eine Programmiersprache eines genierten Auftragsdatensatz anzupassen bzw. zu übersetzen.

Vorzugsweise ist das Schnittstellenmodul eingerichtet, für die Datenübertragung mit einer Werkzeugmaschine bzw. mit deren Steuervorrichtung und/oder mit dem CAM-System und/oder mit dem Produktionsleitsystem jeweils ein passendes Kommunikationsprotokoll aus einer Vielzahl von Kommunikationsprotokollen auszuwählen. Dadurch wird die Kommunikation mit unterschiedlichsten Systemen oder Steuervorrichtung ermöglicht, die beispielsweise vom gängigen Standard abweichende Kommunikationsprotokolle verwenden.

Ein Kommunikationsprotokoll bei der Datenübertragung regelt die Serialisierung der zu übertragenden Daten, die so in einer sequentiellen Form vom Sender den Empfänger übertragen werden, wobei der betreffende Empfänger selbstredend imstande sein muss, das jeweilige Kommunikationsprotokoll zu verwenden. Die mit Hilfe des Kommunikationsprotokolls übertragenen Daten werden nach Empfang durch die deserialisiert und stehen letztlich dem Empfänger zur Verwendung bereit.

Als nicht beschränkende Beispiele für die Vielzahl der Kommunikationsprotokolle seien ein Transmission Control Protocol (TCP), vorzugsweise mit Binärkodierung, oder ein Simple Object Access Protocol (SOAP) genannt.

In einer bevorzugten Ausführungsform ist die Datenschnittstellenvorrichtung zumindest teilweise, insbesondere vollständig, als Teil einer ersten Serverstruktur ausgeführt, die mit dem CAM-System und dem Produktionsleitsystem über Internet- oder eine Intranetverbindung zur Datenübertragung gekoppelt ist, insbesondere ist die Datenschnittstellenvorrichtung cloudbasiert.

So kann das Schnittstellenmodul lokal bereitgestellt werden, wohingegen das die Daten verarbeitende Datenverarbeitungsmodul auf einem in der Regel rechenleistungsstärkeren Server bereitgestellt wird. Alternativ kann zur vollständigen Implementierung aber auch das Schnittstellenmodul auf dem Server bereitgestellt werden.

Dadurch wird eine zentrale Bereitstellung der Datenschnittstellenvorrichtung ermöglicht, sodass diese werkhallenübergreifend oder sogar standortübergreifend eingesetzt werden kann.

In einer bevorzugten Ausführungsform ist das Produktionsleitsystem zumindest teilweise als Teil einer zweiten Serverstruktur ausgeführt, die mit der Datenschnittstellenvorrichtung über eine Internet- oder eine Intranetverbindung zur Datenübertragung gekoppelt ist, insbesondere ist das Produktionsleitsystem cloudbasiert.

In einer bevorzugten Ausführungsform ist das CAM-System zumindest teilweise als Teil einer dritten Serverstruktur ausgeführt, die mit der Datenschnittstellenvorrichtung über eine Internet- oder eine Intranetverbindung zur Datenübertragung gekoppelt ist, insbesondere ist das CAM-System cloudbasiert.

Dadurch können das Produktionsleitsystem und/oder das CAM-System zumindest teilweise auf einem zentral bereitgestellten Server bereitgestellt werden, der in der Regel eine rechenleistungsstärker ausgeführt sein kann. Zudem können so auch Produktionsleitsystem und/oder das CAM-System werkhallenübergreifend oder sogar standortübergreifend eingesetzt werden.

Vorzugsweise weisen das CAM-System und das Produktionsleitsystem jeweils Benutzerschnittstellen auf, insbesondere lokale Benutzerschnittstellen, über die Daten in das CAM- bzw. Produktionsleitsystem auf dem Server von einem Bediener eingegeben werden können.

In einer bevorzugten Ausführungsform umfasst das Schnittstellenmodul eine standardisierte API-Schnittstelle, insbesondere eine offene API-Schnittstelle, zur Datenübertragung mit dem CAM-System und dem Produktionsleitsystem.

Dadurch sind das CAM-System und das Produktionsleitsystem besonders einfach an die Datenschnittstellenvorrichtung ankoppelbar, sodass insbesondere CAM-Systeme und Produktionsleitsysteme unterschiedlicher Hersteller schnell gekoppelt werden können.

In einer bevorzugten Ausführungsform ist die Datenschnittstellenvorrichtung eingerichtet, den Auftragsdatensatz auf Basis mehrere vom Produktionsleitsystem empfangener Fertigungsdatensätze zu generieren.

Dadurch kann beispielsweise eine Priorisierung mehrere Bearbeitungsaufträge vorgenommen werden. Werden beispielsweise Fertigungsdatensätze mit unterschiedlicher Priorisierung übermittelt, so kann ein Vergleich des Prioritätslevels und eine darauf basierende Auswahl durch das Datenverarbeitungsmodul erfolgen, welcher Fertigungsdatensatz zuerst mit dem zugehörigen NC-Programmdatensatz in einen Auftragsdatensatz umgewandelt werden soll.

In einer bevorzugten Ausführungsform umfasst ein vom Produktionsleitsystem generierter und von der Datenschnittstellenvorrichtung empfangbarer Fertigungsdatensatz ein oder mehrere Unterdatensätze, die jeweils Informationen zu einem Fertigungsablauf für zumindest ein zu fertigendes Produkt oder zu einem Bearbeitungsablauf an einer Werkzeugmaschine oder zu einem Prioritätslevel für zumindest ein zu fertigendes Produkt enthalten.

In einer bevorzugten Ausführungsform ist das Schnittstellenmodul der Datenschnittstellenvorrichtung zur Datenübertragung mit einer Vielzahl jeweils unterschiedlich ausgestalteter Produktionsleitsysteme eingerichtet.

Dadurch können mehrere Produktionsleitsysteme zum Einsatz kommen, zum Beispiel von unterschiedlichen Standorten oder gar unterschiedliche Produktionsleitsysteme selbst.

In einer bevorzugten Ausführungsform ist das Datenverarbeitungsmodul der Datenschnittstellenvorrichtung eingerichtet, Fertigungsdatensätze in zumindest zwei unterschiedlichen Daten- und/oder Dateiformaten und/oder Programmiersprachen auszulesen und zu verarbeiten.

In einer bevorzugten Ausführungsform umfasst das Datensystem N weitere Produktionsleitsysteme, mit N≥1, die mit der Datenschnittstellenvorrichtung über deren Schnittstellenmodul zur Datenübertragung gekoppelt sind.

In einer bevorzugten Ausführungsform umfasst das Datensystem M weitere CAM-Systeme umfasst, mit M≥1, die mit der Datenschnittstellenvorrichtung über deren Schnittstellenmodul zur Datenübertragung gekoppelt sind.

Durch mehrere Produktionsleitsysteme und CAM-Systeme können die Funktionalitäten des Datensystem erweitert werden. So können beispielsweise bei einem CAM-System nicht vorhandene Funktionalitäten durch Einbindung eines anderen CAM-Systems in das Datensystem nachgerüstet werden.

In einer bevorzugten Ausführungsform ist das Schnittstellenmodul zur Datenübertragung mit einer Vielzahl jeweils unterschiedlich ausgestalteter numerisch gesteuerter Werkzeugmaschinen eingerichtet, die sich durch unterschiedlich ausgestaltete Steuervorrichtungen unterscheiden.

Die Datenschnittstellenvorrichtung ist dabei, wie in ähnlicher Weise auch bereits vorstehend beschrieben, eingerichtet, ein für die empfangende Werkzeugmaschine der Vielzahl von Werkzeugmaschinen (bzw. für deren Steuervorrichtung) passendes Dateiformat aus einer Vielzahl von vordefinierten Dateiformaten und/oder passendes Datenformat aus einer Vielzahl von vordefinierten Datenformaten und/oder eine passende Programmiersprache aus einer Vielzahl von vordefinierten Programmiersprachen auswählen und den an die betreffende Werkzeugmaschine zu übertragenden Auftragsdatensatz in dem ausgewählten Dateiformat und/oder in dem ausgewählten Datenformat und/oder in der ausgewählten Programmiersprache bereitzustellen.

Hierzu kann das Datenverarbeitungsmodul eingerichtet sein, den Auftragsdatensatz ausgehend vom Fertigungsdatensatz und vom NC-Programmdatensatz direkt im ausgewählten Dateiformat und/oder im ausgewählten Datenformat und/oder in der ausgewählten Programmiersprache zu generieren, derart, dass der generierte Auftragsdatensatz durch die Werkzeugmaschine bzw. durch deren Steuervorrichtung auslesbar ist.

Alternativ kann das Datensystem hierzu auch ein Übersetzungsmodul umfassen, das eingerichtet ist, einen bereits vom Datenverarbeitungsmodul generierten Auftragsdatensatz in ein für die zu empfangende Werkzeugmaschine (bzw. für deren Steuervorrichtung) auslesbaren Auftragsdatensatz zu übersetzen und dabei das Datenformat des generierten Auftragsdatensatzes in das ausgewählte Datenformat abzuändern und/oder das Dateiformat des generierten Auftragsdatensatzes in das ausgewählte Dateiformat abzuändern und/oder die Programmiersprache des generierten Auftragsdatensatzes in die ausgewählte Programmiersprache zu übersetzen, bevor der übersetze Auftragsdatensatz über das Schnittstellenmodul übertragen wird.

In einer bevorzugten Ausführungsform ist die Datenschnittstellenvorrichtung eingerichtet ist, mittels des Schnittstellenmoduls einen von einer numerisch gesteuerten Werkzeugmaschine generierten Prozessdatensatz einer Werkstückbearbeitung zu empfangen und diesen mittels des Schnittstellenmoduls an das CAM-Systems und/oder an das Produktionsleitsystem weiterzuleiten.

Auf diese Weise kann die Datenschnittstellenvorrichtung zeitgleich als Teil eines Prozessüberwachungssystems genutzt werden, bei dem beispielsweise Prozessparameter an das Produktionsleitsystem zurückgeführt werden, sodass dort beispielsweise eine Qualitätskontrolle vorgenommen werden kann.

Insbesondere ist das Datenschnittstellenvorrichtung dabei vorzugsweise eingerichtet, mittels eines Übersetzungsmoduls den von der Werkzeugmaschine empfangenen Prozessdatensatz vor dem Weiterleiten in ein von dem CAM-System und/oder von dem Produktionsleitsystem auslesbares Datenformat und/oder auslesbares Dateiformat zu übersetzen.

In einer bevorzugten Ausführungsform enthält der von der numerisch gesteuerten Werkzeugmaschine generierte Prozessdatensatz aufgezeichnete Prozessparameter der Werkstückbearbeitung oder Informationen zu während der Werkstückbearbeitung aufgetretenen Fehlermeldungen oder Informationen zu Abweichungen vom Auftragsdatensatz, insbesondere zu Abweichungen von dem durch das CAM-System vorgegebenen NC-Programmdatensatz.

Gemäß eines zweiten Aspekts der Erfindung wird Datenschnittstellenvorrichtung zum Einsatz in einem Datensystem zum Generieren und Übertragen von Auftragsdaten an zumindest eine numerisch gesteuerte Werkzeugmaschinen bereitgestellt, insbesondere nach einem der Ansprüche 1 bis 12. Die Datenschnittstellenvorrichtung umfasst ein Schnittstellenmodul zur Datenübertragung; und ein Datenverarbeitungsmodul zur Datenverarbeitung und Datengenerierung, wobei die Datenschnittstellenvorrichtung eingerichtet ist, mittels des Schnittstellenmoduls von einem CAM-System NC-Programme für eine Werkstückbearbeitung an einer numerisch gesteuerten Werkzeugmaschine und Fertigungsdaten für ein zu fertigendes Produkt von einem Produktionsleitsystem zu empfangen, und ferner eingerichtet ist, auf Basis eines vom CAM-System empfangenen NC-Programmdatensatzes und eines vom Produktionsleitsystem empfangenen Fertigungsdatensatzes mittels des Datenverarbeitungsmoduls einen Auftragsdatensatz zu generieren, der durch eine numerisch gesteuerte Werkzeugmaschine auslesbar ist, und diesen mittels des Schnittstellenmoduls an eine mit diesem gekoppelte numerisch gesteuerte Werkzeugmaschine zu übertragen, insbesondere an eine Steuervorrichtung der Werkzeugmaschine.

Auf diese Weise wird eine Möglichkeit geschaffen, ein bestehendes System aus CAM-System und Produktionsleitsystem vergleichsweise schnell durch die separat bereitgestellte Datenschnittstellenvorrichtung zum erfindungsgemäßen Datensystem weitergebildet werden kann, mit allen diesbezüglichen Vorteilen.

Die vorstehend im Zuge des Datensystems beschriebenen Merkmale der Datenschnittstellenvorrichtung gelten auch hier mit allen damit verbundenen Vorteile, sodass auf eine erneute Beschreibung derer an dieser Stelle verzichtet wird.

Gemäß eines dritten Aspekts der Erfindung wird ein Fertigungssystem bereitgestellt, das ein Datensystem gemäß des ersten Aspekts oder gemäß einer von dessen bevorzugter Ausführungen sowie zumindest eine numerisch gesteuerte Werkzeugmaschinen umfasst. Die zumindest eine Werkzeugmaschine ist zur Datenübertragung von Auftragsdaten mit dem Schnittstellenmodul der Datenschnittstellenvorrichtung des Datensystems gekoppelt und ist zumindest eingerichtet, ein in einem Arbeitsraum der zumindest einen Werkzeugmaschine befindliches Werkstück auf Basis eines vom Datensystem empfangenen Auftragsdatensatzes zu bearbeiten.

Auf diese Weise kann ein gesamtes Fertigungssystem mit der vorteilhaften Funktionalität des erfindungsgemäßen Datensystems bereitgestellt werden, das sich im Vergleich zu bekannten Fertigungssystemen durch einen höheren Automatisierungsgrad auszeichnet.

Gemäß eines vierten Aspekts der Erfindung wird ein Verfahren zum Steuern einer numerisch gesteuerten Werkzeugmaschine unter Einsatz eines Datensystems zum Generieren und Übertragen von Auftragsdaten, insbesondere Datensystem gemäß des ersten Aspekts oder gemäß einer von dessen bevorzugter Ausführungen, bereitgestellt. Das Verfahren umfasst ein Empfangen eines Fertigungsdatensatzes für ein zu fertigendes Produkt mittels eines Schnittstellenmoduls einer Datenschnittstellenvorrichtung von einem Produktionsleitsystem, ein Empfangen eines NC-Programmdatensatzes für eine Werkstückbearbeitung an einer numerisch gesteuerten Werkzeugmaschine mittels des Schnittstellenmoduls von einem CAM-System, ein Generieren eines Auftragsdatensatzes, der durch eine numerisch gesteuerte Werkzeugmaschine auslesbar ist, auf Basis des empfangenen NC-Programmdatensatzes und des empfangenen Fertigungsdatensatzes mittels eines Datenverarbeitungsmoduls der Datenschnittstellenvorrichtung, ein Übertragen des generierten Auftragsdatensatzes an die numerisch gesteuerte Werkzeugmaschine, insbesondere an deren Steuervorrichtung, mittels des Schnittstellenmoduls, und ein Steuern der numerisch gesteuerten Werkzeugmaschine in Abhängigkeit des an diese übertragenen Auftragsdatensatzes.

Unter dem Steuern der Werkzeugmaschine ist dabei das Steuern einer oder mehrere Aktoren der Werkzeugmaschine im Zuge der Werkstückbearbeitung zu verstehen, beispielsweise handelts es sich bei besagten Aktoren um Linear-, Rund- oder Schwenkachsen einer Bearbeitungsvorrichtung oder eines Maschinentischs, oder um Antriebe für Arbeitsspindeln, oder um Hilfssysteme (Absaugung, Kühlmittelversorgung).

Das bereitgestellte Verfahren bietet die Möglichkeit, eine Werkzeugmaschine für die Fertigung eines Produkts weitestgehend vollautomatisiert zu betreiben, nicht nur bei den eigentlichen Bearbeitungsschritten, sondern bereits zur Vorbereitung im Vorfeld, was wiederum Zeit und Kosten einspart.

Weitere Aspekte und deren Vorteile als auch speziellere Ausführungsbeispiele der zuvor genannten Aspekte und Ausführungsformen werden im Folgenden unter Zuhilfenahme der in den beigefügten Figuren gezeigten Zeichnungen beschrieben.

Fig. 1 zeigt eine schematische Ansicht eines Ausführungsbeispiels des erfindungsgemäßen Fertigungssystems, welches ein Ausführungsbeispiel des erfindungsgemäßen Datensystems umfasst, das wiederum ein Ausführungsbeispiel der erfindungsgemäßen Datenschnittstellenvorrichtung umfasst.

Fig. 2 zeigt ein schematisches Ablaufdiagramm eines Ausführungsbeispiels des erfindungsgemäßen Verfahrens zum Steuern einer numerisch gesteuerten Werkzeugmaschine.

Es wird hervorgehoben, dass die vorliegende Erfindung in keiner Weise auf die nachfolgend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

### Ausführliche Figurenbeschreibung

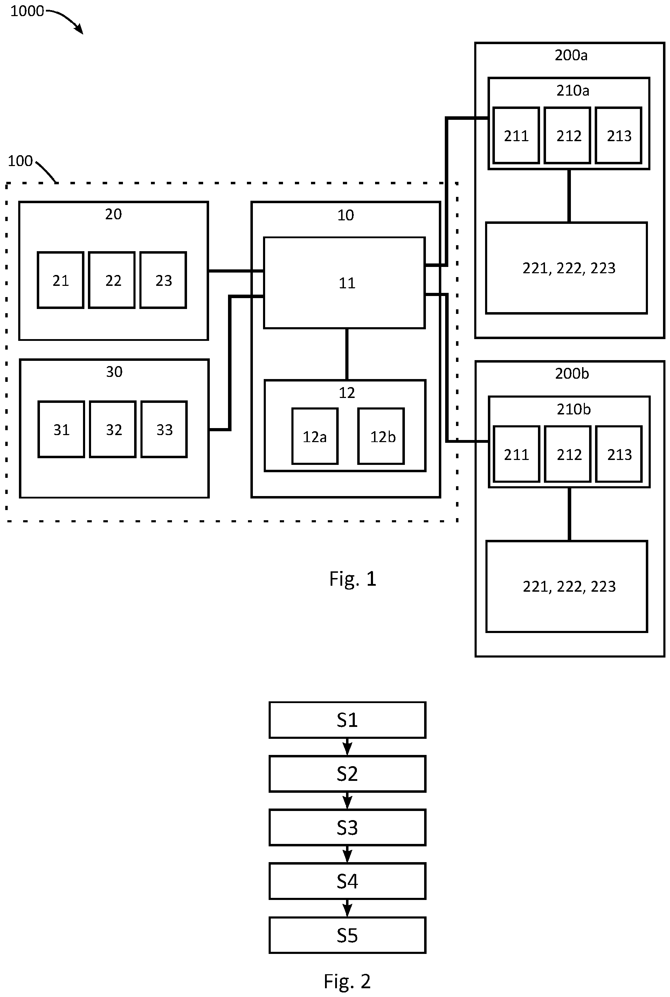

Fig. 1 zeigt eine schematische Ansicht eines Ausführungsbeispiels des erfindungsgemäßen Fertigungssystems 1000, welches ein Ausführungsbeispiel des erfindungsgemäßen Datensystems 100 umfasst, das wiederum ein Ausführungsbeispiel der erfindungsgemäßen Datenschnittstellenvorrichtung 10 umfasst.

Das Fertigungssystem 1000 umfasst das Datensystem 100 sowie zumindest eine numerisch gesteuerte Werkzeugmaschine 200a, im vorliegenden Beispiel zusätzlich eine weitere numerisch gesteuerte Werkzeugmaschine 200b.

Das Datensystem umfasst eine Datenschnittstellenvorrichtung 10, ein CAM-System 20 und ein Produktionsleitsystem 30.

Die Datenschnittstellenvorrichtung 10 umfasst wiederum ein Schnittstellenmodul 11 zur Datenübertragung und ein Datenverarbeitungsmodul 12 zur Datenverarbeitung und Datengenerierung, wozu dieses beispielhaft eine Speichereinheit 12b und eine CPU 12a umfasst.

Das CAM-System 20 ist zum Generieren und Bereitstellen von NC-Programmen für eine Werkstückbearbeitung an numerisch gesteuerten Werkzeugmaschinen 200a, 200b eingerichtet und zur Datenübertragung mit der Datenschnittstellenvorrichtung 10 mit deren Schnittstellenmodul 11 gekoppelt (dargestellt durch fett gezeichnete Verbindungslinie).

Das Produktionsleitsystem 30 ist zum Generieren und Bereitstellen von Fertigungsdaten für ein zu fertigendes Produkt und/oder für zu fertigenden Produkte eingerichtet und zur Datenübertragung mit der Datenschnittstellenvorrichtung 10 ebenfalls mit deren Schnittstellenmodul 11 gekoppelt.

Sowohl CAM-System 20 als auch Produktionsleitsystem 30 umfassen als Datenverarbeitungssysteme beispielhaft jeweils eine CPU 21, 31 und eine Speichereinheit 22, 32. Ferner weisen beide Systeme 20, 30 Benutzerschnittstellen 23, 33 auf, über die Benutzereingaben erfasst werden können und über die ein Benutzer beispielsweise einen NC-Programmdatensatz bzw. einen Fertigungsdatensatz eingeben oder abändern kann.

Die Datenschnittstellenvorrichtung 10 ist eingerichtet, auf Basis eines vom CAM-System 20 empfangenen NC-Programmdatensatzes und eines vom Produktionsleitsystem 30 empfangenen Fertigungsdatensatzes mittels des Datenverarbeitungsmoduls 12 einen Auftragsdatensatz zu generieren, der durch eine numerisch gesteuerte Werkzeugmaschine 200a, 200b auslesbar ist, und diesen mittels des Schnittstellenmoduls 11 an eine mit diesem gekoppelte numerisch gesteuerte Werkzeugmaschine 200a; 200b zu übertragen bzw. an deren jeweilige Steuervorrichtung 210a; 210b.

Die Werkzeugmaschinen 200a, 200b bzw. deren Steuervorrichtungen 210a, 210b sind zur Datenübertragung von Auftragsdaten mit dem Schnittstellenmodul 11 der Datenschnittstellenvorrichtung 10 des Datensystems 100 gekoppelt und zumindest eingerichtet, ein in einem jeweiligen Arbeitsraum der Werkzeugmaschine 200a, 200b befindliches Werkstück auf Basis eines vom Datensystem 100 empfangenen Auftragsdatensatzes zu bearbeiten.

Hierzu sind die Werkzeugmaschine 200a, 200b bzw. deren Steuervorrichtungen 210a, 210b eingerichtet, ein oder mehrere Aktoren 221, 222, 223 der Werkzeugmaschinen 200a, 200b in Abhängigkeit des empfangenen Auftragsdatensatzes anzusteuern.

Zur Datenverarbeitung umfassen die Steuervorrichtungen 210a, 210b dabei beispielhaft jeweils eine CPU 211 und eine Speichereinheit 212, in der vorzugsweise der empfangene Auftragsdatensatz abgespeichert wird. Zusätzlich kann eine Steuerung der Werkzeugmaschine 200a, 200b auch über Eingaben an einer jeweiligen Benutzerschnittstelle 213 der Steuervorrichtung 210a, 210b erfolgen.

Die beiden Werkzeugmaschinen 200a, 200b können unterschiedliche ausgestaltet sein, insbesondere deren Steuervorrichtungen 210a, 210b, die beispielsweise von unterschiedlichen Herstellern stammen.

Das Schnittstellenmodul 11 ist zur Datenübertragung mit den unterschiedlich ausgestalteten numerisch gesteuerten Werkzeugmaschinen 200 bzw. mit den unterschiedlich ausgestalteten Steuervorrichtungen 210 eingerichtet.

Hierzu ist die Datenschnittstellenvorrichtung 10 insbesondere eingerichtet ist, ein für die jeweilige Steuervorrichtung 210a; 210b der den Auftragsdatensatz empfangende Werkzeugmaschine 200a; 200b passendes Dateiformat aus einer Vielzahl von vordefinierten Dateiformaten und/oder passendes Datenformat aus einer Vielzahl von vordefinierten Datenformaten und/oder eine passende Programmiersprache aus einer Vielzahl von vordefinierten Programmiersprachen auswählen und den an die betreffende Steuervorrichtung 210a; 210b zu übertragenden Auftragsdatensatz in dem ausgewählten Dateiformat und/oder in dem ausgewählten Datenformat und/oder in der ausgewählten Programmiersprache bereitzustellen.

Auf diese Weise können Auftragsdatensätze unabhängig von einer individuellen Implementierung der Steuervorrichtungen 210a, 210b über das Datensystem 100 bereitgestellt und übertragen werden.

Durch das Datensystem 100 wird eine automatisierte Bereitstellung von Auftragsdaten an numerisch gesteuerten Werkzeugmaschinen 200a, 200b über die Datenschnittstellenvorrichtung 10 als universelle Schnittstelle bereitgestellt, die die vorher weitestgehend manuell (über USB-Stick etc.) an die Werkzeugmaschinen 200a, 200b zu übertragenden Daten bündelt und gesammelt als Auftragsdatensatz an diese überträgt.

Auf diese Weise werden Arbeitsläufe im Bereich der Massenfertigung zunehmend automatisiert, was Zeit und Kosten einspart und die Flexibilität im Maschinepark erhöht. So können beispielsweise neue Werkzeugmaschinen ohne größeren Aufwand integriert werden und direkt mit Daten vom CAM-System 20 und Produktionsleitsystem 30 über die Datenschnittstellenvorrichtung 10 versorgt werden.

Fig. 2 zeigt ein schematisches Ablaufdiagramm eines Ausführungsbeispiels des erfindungsgemäßen Verfahrens Steuern einer numerisch gesteuerten Werkzeugmaschine unter Einsatz eines Datensystems zum Generieren und Übertragen von Auftragsdaten.

In Schritt S1 erfolgt Empfangen eines Fertigungsdatensatzes für ein zu fertigendes Produkt mittels eines Schnittstellenmoduls einer Datenschnittstellenvorrichtung von einem Produktionsleitsystem.

In Schritt S2 erfolgt ein Empfangen eines NC-Programmdatensatzes für eine Werkstückbearbeitung an einer numerisch gesteuerten Werkzeugmaschine mittels des Schnittstellenmoduls von einem CAM-System.

In Schritt S3 erfolgt ein Generieren eines Auftragsdatensatzes, der durch eine numerisch gesteuerte Werkzeugmaschine auslesbar ist, auf Basis des in Schritt S2 empfangenen NC-Programmdatensatzes und des in Schritt S1 empfangenen Fertigungsdatensatzes mittels eines Datenverarbeitungsmoduls der Datenschnittstellenvorrichtung.

In Schritt S4 erfolgt Übertragen des in Schritt S3 generierten Auftragsdatensatzes an die numerisch gesteuerte Werkzeugmaschine, insbesondere an deren Steuervorrichtung, mittels des Schnittstellenmoduls.

In Schritt S5 erfolgt ein Steuern der numerisch gesteuerten Werkzeugmaschine in Abhängigkeit des an diese in Schritt S4 übertragenen Auftragsdatensatzes.

Vorstehend wurden Ausführungsbeispiele der vorliegenden Erfindung sowie deren Vorteile detailliert unter Bezugnahme auf die beigefügten Figuren beschrieben.

Es wird erneut hervorgehoben, dass die vorliegende Erfindung in keiner Weise auf die vorstehend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

### Liste der Bezugszeichen

- 10: Datenschnittstellenvorrichtung
- 11: Schnittstellenmodul
- 12: Datenverarbeitungsmodul
- 12a: Speichereinheit
- 12b: CPU
- 20: CAM-System
- 21: CPU
- 22: Speichereinheit
- 23: Benutzerschnittstelle
- 30: Produktionsleitsystem
- 31: CPU
- 32: Speichereinheit
- 33: Benutzerschnittstelle
- 100: Datensystem
- 200a, 200b: Werkzeugmaschine
- 210a, 210b: Steuervorrichtung der Werkzeugmaschine
- 211: CPU
- 212: Speichereinheit
- 213: Benutzerschnittstelle
- 221, 222, 223: Aktoren
- 1000: Fertigungssystem

## Patentansprüche

1. Datensystem (100) zum Generieren und Übertragen von Auftragsdaten an zumindest eine numerisch gesteuerte Werkzeugmaschine (200a, 200b), umfassend:
- eine Datenschnittstellenvorrichtung (10), die wiederum ein Schnittstellenmodul (11) zur Datenübertragung und ein Datenverarbeitungsmodul (12) zur Datenverarbeitung und Datengenerierung umfasst;
- ein CAM-System (20), das zum Generieren und Bereitstellen von NC-Programmen für eine Werkstückbearbeitung an einer numerisch gesteuerten Werkzeugmaschine (200a, 200b) eingerichtet ist und zur Datenübertragung mit der Datenschnittstellenvorrichtung (10) mit deren Schnittstellenmodul (11) gekoppelt ist; und
- ein Produktionsleitsystem (30), das zum Generieren und Bereitstellen von Fertigungsdaten für ein zu fertigendes Produkt und/oder für zu fertigende Produkte eingerichtet ist und zur Datenübertragung mit der Datenschnittstellenvorrichtung (10) mit deren Schnittstellenmodul (11) gekoppelt ist;
wobei die Datenschnittstellenvorrichtung (10) eingerichtet ist, auf Basis eines vom CAM-System (20) empfangenen NC-Programmdatensatzes und eines vom Produktionsleitsystem (30) empfangenen Fertigungsdatensatzes mittels des Datenverarbeitungsmoduls (12) einen Auftragsdatensatz zu generieren, der durch eine numerisch gesteuerte Werkzeugmaschine (200a, 200b) auslesbar ist, und diesen mittels des Schnittstellenmoduls (11) an eine mit diesem gekoppelte numerisch gesteuerte Werkzeugmaschine (200a, 200b) zu übertragen, insbesondere an eine Steuervorrichtung (210a, 210b) der Werkzeugmaschine (200a, 200b).

2. Datensystem (100) nach Anspruch 1, wobei
die Datenschnittstellenvorrichtung (10) zumindest teilweise als Teil einer ersten Serverstruktur ausgeführt ist, die mit dem CAM-System (20) und dem Produktionsleitsystem (30) über Internet- oder eine Intranetverbindung zur Datenübertragung gekoppelt ist, insbesondere ist die Datenschnittstellenvorrichtung (10) cloudbasiert.

3. Datensystem (100) nach Anspruch 2, wobei
das Produktionsleitsystem (30) zumindest teilweise als Teil einer zweiten Serverstruktur ausgeführt ist, die mit der Datenschnittstellenvorrichtung (10) über eine Internet- oder eine Intranetverbindung zur Datenübertragung gekoppelt ist, insbesondere ist das Produktionsleitsystem (30) cloudbasiert, und/oder
das CAM-System (20) zumindest teilweise als Teil einer dritten Serverstruktur ausgeführt ist, die mit der Datenschnittstellenvorrichtung (10) über eine Internetoder eine Intranetverbindung zur Datenübertragung gekoppelt ist, insbesondere ist das CAM-System (20) cloudbasiert

4. Datensystem (100) nach zumindest einem der Ansprüche 1 bis 3, wobei
das Schnittstellenmodul (11) eine standardisierte API-Schnittstelle umfasst, insbesondere eine offene API-Schnittstelle, zur Datenübertragung mit dem CAM-System (20) und dem Produktionsleitsystem (30).

5. Datensystem (100) nach zumindest einem der Ansprüche 1 bis 4, wobei
die Datenschnittstellenvorrichtung (10) eingerichtet ist, den Auftragsdatensatz auf Basis mehrerer vom Produktionsleitsystem (30) empfangener Fertigungsdatensätze zu generieren.

6. Datensystem (100) nach zumindest einem der Ansprüche 1 bis 5, wobei
ein vom Produktionsleitsystem (30) generierter und von der Datenschnittstellenvorrichtung (10) empfangbarer Fertigungsdatensatz ein oder mehrere Unterdatensätze umfasst, die jeweils Informationen zu einem Fertigungsablauf für zumindest ein zu fertigendes Produkt oder zu einem Bearbeitungsablauf an einer Werkzeugmaschine (200a, 200b) oder zu einem Prioritätslevel für zumindest ein zu fertigendes Produkt enthalten.

7. Datensystem (100) nach zumindest einem der Ansprüche 1 bis 6, wobei
das Schnittstellenmodul (11) der Datenschnittstellenvorrichtung (10) zur Datenübertragung mit einer Vielzahl jeweils unterschiedlich ausgestalteter Produktionsleitsysteme eingerichtet ist.

8. Datensystem (100) nach Anspruch 7, wobei
das Datenverarbeitungsmodul (12) der Datenschnittstellenvorrichtung (10) eingerichtet ist, Fertigungsdatensätze in zumindest zwei unterschiedlichen Datenund/oder Dateiformaten auszulesen und zu verarbeiten.

9. Datensystem (100) nach zumindest einem der Ansprüche 1 bis 8, wobei
das Datensystem (100) N weitere Produktionsleitsysteme umfasst, mit N≥1, die mit der Datenschnittstellenvorrichtung (10) über deren Schnittstellenmodul (11) zur Datenübertragung gekoppelt sind; und/oder
das Datensystem (100) M weitere CAM-Systeme (20) umfasst, mit M≥1, die mit der Datenschnittstellenvorrichtung (10) über deren Schnittstellenmodul (11) zur Datenübertragung gekoppelt sind.

10. Datensystem (100) nach zumindest einem der Ansprüche 1 bis 9, wobei
das Schnittstellenmodul (11) zur Datenübertragung mit einer Vielzahl jeweils unterschiedlich ausgestalteter numerisch gesteuerter Werkzeugmaschinen (200a, 200b) eingerichtet ist, die sich durch unterschiedlich ausgestaltete Steuervorrichtungen (210a, 210b) unterscheiden,
wobei die Datenschnittstellenvorrichtung (10) eingerichtet ist, ein für die Steuervorrichtung (210a, 210b) der empfangende Werkzeugmaschine (200a, 200b) der Vielzahl von Werkzeugmaschinen passendes Dateiformat aus einer Vielzahl von vordefinierten Dateiformaten und/oder passendes Datenformat aus einer Vielzahl von vordefinierten Datenformaten und/oder eine passende Programmiersprache aus einer Vielzahl von vordefinierten Programmiersprachen auswählen und den an die betreffende Steuervorrichtung (210a, 210b) zu übertragenden Auftragsdatensatz in dem ausgewählten Dateiformat und/oder in dem ausgewählten Datenformat und/oder in der ausgewählten Programmiersprache bereitzustellen.

11. Datensystem (100) nach zumindest einem der Ansprüche 1 bis 10, wobei
die Datenschnittstellenvorrichtung (10) eingerichtet ist, mittels des Schnittstellenmoduls (11) einen von einer numerisch gesteuerten Werkzeugmaschine (200a, 200b) generierten Prozessdatensatz einer Werkstückbearbeitung zu empfangen und diesen mittels des Schnittstellenmoduls (11) an das CAM-Systems (20) und/oder an das Produktionsleitsystem (30) weiterzuleiten,
wobei das Datenverarbeitungsmodul (12) vorzugsweise eingerichtet ist, mittels des Datenverarbeitungsmoduls (12) den von den Werkzeugmaschinen empfangenen Prozessdatensatz vor dem Weiterleiten in ein von dem CAM-System (20) und/oder von dem Produktionsleitsystem (30) auslesbares Daten- und/oder Dateiformat zu übersetzen.

12. Datensystem (100) nach Anspruch 11, wobei
der von der numerisch gesteuerten Werkzeugmaschine (200a, 200b) generierte Prozessdatensatz aufgezeichnete Prozessparameter der Werkstückbearbeitung oder Informationen zu während der Werkstückbearbeitung aufgetretene Fehlermeldung oder Informationen zu Abweichungen vom Auftragsdatensatz, insbesondere zu Abweichungen von dem durch das CAM-System (20) vorgegebenen NC-Programm, enthält.

13. Datenschnittstellenvorrichtung (10) zum Einsatz in einem Datensystem (100) zum Generieren und Übertragen von Auftragsdaten an zumindest einer numerisch gesteuerten Werkzeugmaschine, insbesondere nach einem der Ansprüche 1 bis 12, umfassend:
- ein Schnittstellenmodul (11) zur Datenübertragung; und
- ein Datenverarbeitungsmodul (12) zur Datenverarbeitung und Datengenerierung;
wobei die Datenschnittstellenvorrichtung (10) eingerichtet ist, mittels des Schnittstellenmoduls (11) von einem CAM-System (20) NC-Programme für eine Werkstückbearbeitung an einer numerisch gesteuerten Werkzeugmaschine (200a, 200b) und Fertigungsdaten für ein zu fertigendes Produkt von einem Produktionsleitsystem (30) zu empfangen, und ferner eingerichtet ist, auf Basis eines vom CAM-System (20) empfangenen NC-Programmdatensatzes und eines vom Produktionsleitsystem (30) empfangenen Fertigungsdatensatzes mittels des Datenverarbeitungsmoduls (12) einen Auftragsdatensatz zu generieren, der durch eine numerisch gesteuerte Werkzeugmaschine (200a, 200b) auslesbar ist, und diesen mittels des Schnittstellenmoduls (11) an eine mit diesem gekoppelte numerisch gesteuerte Werkzeugmaschine (200a, 200b) zu übertragen, insbesondere an eine Steuervorrichtung (210a, 210b) der Werkzeugmaschine (200a, 200b).

14. Fertigungssystem (1000), umfassend:
- Datensystem (100) nach einem der Ansprüche 1 bis 12;
- zumindest eine numerisch gesteuerte Werkzeugmaschine;
wobei die zumindest eine Werkzeugmaschine (200a, 200b) zur Datenübertragung von Auftragsdaten mit dem Schnittstellenmodul (11) der Datenschnittstellenvorrichtung (10) des Datensystems (100) gekoppelt ist und zumindest eingerichtet ist, ein in einem Arbeitsraum der zumindest einen Werkzeugmaschine (200a, 200b) befindliches Werkstück auf Basis eines vom Datensystem (100) empfangenen Auftragsdatensatzes zu bearbeiten.

15. Verfahren zum Steuern einer numerisch gesteuerten Werkzeugmaschine (200a, 200b) unter Einsatz eines Datensystems (100) zum Generieren und Übertragen von Auftragsdaten, insbesondere nach einem der Ansprüche 1 bis 12, umfassend:
- Empfangen eines Fertigungsdatensatzes für ein zu fertigendes Produkt mittels eines Schnittstellenmoduls (11) einer Datenschnittstellenvorrichtung (10) von einem Produktionsleitsystem (30);
- Empfangen eines NC-Programmdatensatzes für eine Werkstückbearbeitung an einer numerisch gesteuerten Werkzeugmaschine (200a, 200b) mittels des Schnittstellenmoduls (11) von einem CAM-System;
- Generieren eines Auftragsdatensatzes, der durch eine numerisch gesteuerte Werkzeugmaschine (200a, 200b) auslesbar ist, auf Basis des empfangenen NC-Programmdatensatzes und des empfangenen Fertigungsdatensatzes mittels eines Datenverarbeitungsmoduls (12) der Datenschnittstellenvorrichtung (10);
- Übertragen des generierten Auftragsdatensatzes an die numerisch gesteuerte Werkzeugmaschine (200a, 200b), insbesondere an deren Steuervorrichtung (210a, 210b), mittels des Schnittstellenmoduls (11); und
- Steuern der numerisch gesteuerten Werkzeugmaschine (200a, 200b) in Abhängigkeit des an diese übertragenen Auftragsdatensatzes.
